Europäisches Patentamt

(19) European Patent Office

Office européen des brevets

(11) EP 0 717 362 A1

(12) EUROPEAN PATENT APPLICATION

(43) Date of publication:
19.06.1996 Bulletin 1996/25

(51) Int. Cl.$^6$: G06F 13/362

(21) Application number: 94830573.5

(22) Date of filing: 13.12.1994

(84) Designated Contracting States:
DE FR GB IT

(71) Applicant: BULL HN INFORMATION SYSTEMS
ITALIA S.p.A.
I-10014 Caluso (Torino) (IT)

(72) Inventors:
• De Pieri, Fabio
I-20010 Pogliano Milanese (Milano) (IT)

• Tagliabue, Pierluigi
I-20159 Milano (IT)

(74) Representative: Falcetti, Carlo et al
c/o JACOBACCI & PERANI S.p.A.
Via Visconti di Modrone, 7
20122 Milano (IT)

(54) **An arbitrator of access to a MCA channel by several control units with centralized arbitration processor interface,in particular LAN and SCSI control units**

(57) An arbitrator of access to the MCA channel by several control units (4,5) with centralized arbitration processor interface receives access requests (HOLDSC,HOLDL) from the units (4,5), synchronizes them with an arbitration phase of the MCA channel, pre-arbitrates between the units (4,5) and presents on the MCA channel a priority code which corresponds to a pri-

ority assigned to the pre-arbitrated unit, partakes in the MCA channel arbitration with a local arbitration network (17) common to all the pre-arbitrated units (4,5), and if successful in the arbitration, grants selective access to the pre-arbitrated unit which comes out the winner from the arbitration.

FIG.1

EP 0 717 362 A1

## Description

The present invention relates to an access arbitrator which allows a plurality of (preferably but not necessarily 2) control units provided with a system channel connection interface of the centralized arbitration type, such as the system interface of the Intel 386, 486 and Motorola 68040 microprocessors, to be connected to an MCA channel.

It is known that system channels or system bus in data processing systems are channels which are accessed, in mutual competition, by several electronic units, such as central processing units, input/output data controllers or I/O controllers, for the purpose of communicating with one another or writing/reading information in working memories which are also connected in the system channel.

The access to the system bus is controlled by a central arbitration unit which receives, on a discrete lead from each unit, a bus access request signal having varying appropriate names, such as HOLD, BREQ, but the same function, and responds with a channel grant signal (HOLDACK, BGRANT, and the like names) sent over discrete leads to one requesting unit at a time.

Upon receiving this signal, that unit which has been granted use of the bus asserts, for all the time while the channel is occupied, a busy channel signal (BSY, BUS-ON, and the like names) over a single channel lead which can be driven by all the units.

The arbitration process is a synchronous one and is clocked by a periodic signal CK.

The unit that got bus possession can then place addresses, commands, data on leads of the bus which are common for all the units and select one unit as the addressee of messages or commands.

To simplify the problems and limitations involved in a synchronous centralized arbitration system and simplify the architecture of the system bus, the architecture known by the name MCA or MicroChannel Architecture has been developed.

This architecture differs substantially from centralized arbitration architectures in that the bus is accessed by the units connected therein using an asynchronous arbitration distributed among all the units and executed on a set of leads to which all the units have access.

The single centralized function is one of recognizing bus access requests, regardless of how generated and as identified by a common asserted signal PREEMPT, and asserting an arbitration signal ARB/GRANT for a predetermined time interval of no less than 100 ns.

During this time interval, all the units that need to access the bus are authorized to assert, on four leads common to all the units or arbitration bus, a unit identifier code, and according to the code recognized on the channel, which is the OR of all the codes placed on the channel, are capable of recognizing themselves, by a local arbitration logic, as winners or losers in the arbitration, and if losers, are to remove the signals asserted thereby on the arbitration bus within at most 50 ns from the assertion of the signal ARB/GNT.

The arbitration central control point then de-asserts the signal ARB/GNT and thereby acknowledges ownership of the bus to the winner unit, which will hold it until de-assertion of the last of a plurality of control signals S0, S1, BURST, CMD which become asserted.

The occupation is then identified by the assertion of at least one of different signals S0, S1, BURST, CMD, and the free state by their de-assertion.

Apparently, it would be impossible to connect control units with centralized arbitration interface to an MCA channel because the arbitration mechanisms are incompatible.

A further function served by the MCA architecture is a "FAIRNESS" one, which prevents a unit which has been given access to the bus from partaking in the next arbitrations and forces it into an inactive state from which it only comes out upon recognition of a transition of the bus request signal PREEMPT from an active to an inactive state.

The control units with centralized arbitration interface have no such function and there is a risk of they monopolizing the bus occupation.

A much felt need is instead that of having commercially available control units with centralized arbitration interface connected to an MCA channel, in order to provide the utmost flexibility of system configuration by combining different apparatus together either because readily available on the market or already available to the user.

This demand is filled by the MCA channel access arbitrator forming the subject-matter of this invention, which solves the technical problem of conciliating the arbitration requirements imposed by the MCA architecture with the functionality afforded by centralized arbitration control units, to accommodate the stringent time limitations imposed on the MCA architecture. The local arbitration process should be completed, in fact, within a time interval of no more than 50 ns.

The technical problem is solved by an asynchronous state machine associated with a synchronization logic for bus access request signals generated by the control units and with a local arbitration logic.

The state machine which controls the arbitration logic is of necessity an asynchronous type in order to be operated without the delay imposed by synchronization with a periodic clocking signal and to change its state according to asynchronous input signals directly on their occurrence.

In order to correctly evolve the machine states, it is generally necessary that these signals change their electric state one at a time.

This condition is met by the synchronization logic.

Advantageously, the state machine also performs a pre-arbitration among the control units, preferably between two of them, which are competing for access to the MCA bus, so that the demands for arbitration from either units can be filled by a single arbitration logic.

Advantageously, also associated with the state machine is a control logic for the FAIRNESS function with which at least one of the control units is provided.

The features amd advantages of the invention will be apparent from the following description of a preferred embodiment and the accompanying drawings, in which:

Figure 1 is a block diagram of the architecture of a processing system incorporating the arbitrator of the present invention;

Figure 2 is a time diagram of the arbitration protocol used by the MCA channel;

Figure 3 is a block diagram of a preferred embodiment of an arbitrator according to the present invention;

Figure 4 is a wiring diagram of a synchronization logic for the arbitrator in Figure 3;

Figure 5 is a wiring diagram of a logic performing the "fairness" function for a control unit connected to the arbitrator and having no such function feature;

Figure 6 is a wiring diagram of a local arbitration logic of the arbitrator in Figure 3;

Figure 7 is a state diagram of the states and state transitions of an asynchronous state machine of the arbitrator in Figure 3.

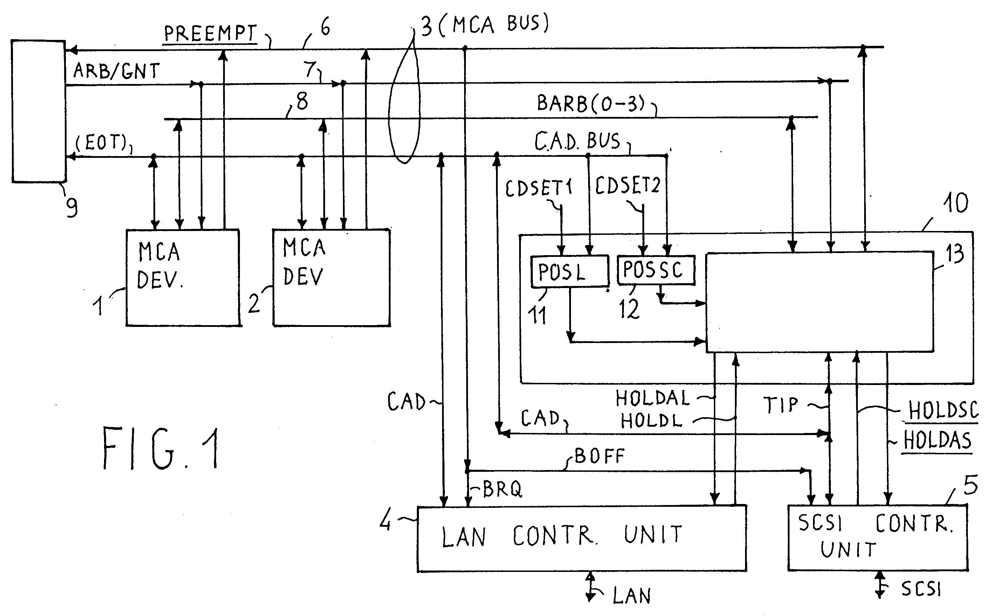

In the interest of a better understanding of the invention and the technical problems solved thereby, Figure 1 is a block diagram showing in schematic form an architecture for a data processing system which employs a communication bus of the MCA type and an arbitrator embodying the present invention for connecting electronic units with centralized arbitration processor interface to the MCA bus.

The MCA channel comprises a plurality of leads collectively designated MCABUS (numeral 3) to which a plurality of electronic units or MCA DEV 1, 2 with MCA interface are connected.

Also connected to the MCA channel are two units 4, 5 with centralized arbitration processor interface. The total number of the units which can be connected to the MCA bus is 16.

The unit 4 is a high-performance co-processor for controlling a local area communication network or LAN, of which the 82596DX and 82596SX co-processors from INTEL are a commercially available example.

The unit 5 is a processor controlling input/output data on a channel of the SCSI type of which the NCR53C720 processor from NCR is a commercially available example.

The MCA channel comprises a bundle of leads, collectively designated CAD BUS, for transferring control (C), address (A), and data (D) signals which, from the functional and electrical standpoints, with the exception of a possible level reversal, are fully equivalent both in the MCA architecture and in the system architectures with interface of the INTEL 386, MOTOROLA 68040 and the like types.

For this reason, the units 4 and 5 have a set of terminals, collectively designated CAD, which are connected to the leads CAD BUS directly (or optionally through drivers and receivers).

The MCA channel also comprises a lead 6 for transferring an access request signal PREEMPT to the MCA bus, a lead 7 for transferring a signal ARB/GNT which defines, by its high or low electric level, an arbitration phase or a bus granting phase, and four leads 8 for transferring signals ARB(0-3) which define a binary code correlated with one priority level of 16 levels.

Both here and hereinafter the convention is used, dictated by typewriting requirements, of underlining the name of a signal whenever its asserted or true logic level is electrically zero, whereas its de-asserted or false logic level is electrically high or conventionally 1.

The underlining, therefore, conveys a logical negation or inversion meaning.

Thus, PREEMPT means that its namesake signal is true when at a zero electric level and false when at an electric level of 1, whereas ARB/GNT is asserted when at an electric level of 1 and de-asserted when at an electric level of 0.

Also connected to the MCA channel is a central arbitration node 9 which receives the signal PREEMPT and certain signals (EOT) present on the leads CAD BUS which define a condition of transfer end.

The node 9 controls, according to these signals, the assertion of the signal ARB/GNT. The central arbitration point 9, differently from the central arbitration systems, receives no individual requests for access to the bus from the various units connected thereto nor does it grant selective access to each of these in conformity with a predetermined order of priority but limits itself to recognizing that no transfers are taking place on the bus and that at least one request of access to the bus (asserted PREEMPT) is present, and then assigns, by the assertion of ARB/GNT, a predetermined time interval to an arbitration phase during which the various units connected to the MCA bus, being each provided with a local arbitration network, are each to decide if it has priority over the other units requesting access to the bus.

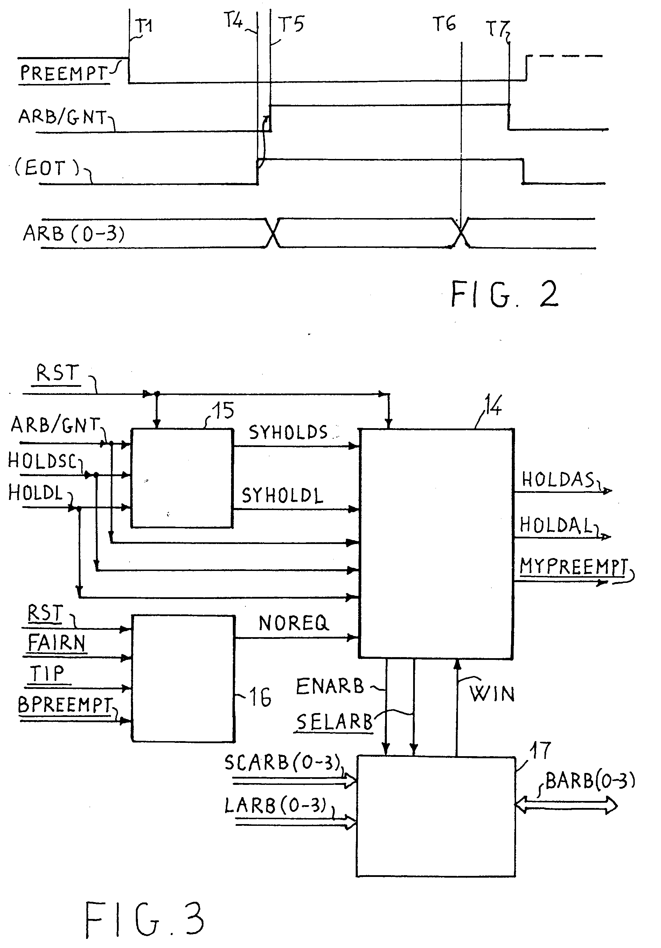

Figure 2 is a time diagram of the arbitration protocol used in the MCA architecture which is fully asynchronous.

At any time T1, one of the apparatus connected to the MCA bus can assert the signal PREEMPT by lowering the electric level on the lead 6.

The central arbitration node receives the signal, and in general, is to wait for the current transfer operations on the bus to be completed before it can grant an arbitration step.

When all the signals which define a condition of end of transfer (EOT) are asserted (time T4), the unit 9 asserts the signal ARB/GNT (time T5) for a predetermined time interval (interval T5, T7).

It is apparent that during the time interval T1, T5, other units may request access to the bus by asserting the signal PREEMPT, so that several units may be competing in the arbitration step for access to the bus.

Within the time interval T5, T7, the various competing units are to place on the leads 8 a binary code which corresponds to the level of priority assigned to each of them, so that a binary code will appear on the leads 8 which is the OR of the various binary codes applied and are to examine the code actually present on the leads 8, and if this code corresponds to a higher priority than the individually assigned one, are to remove the code applied by them from the leads 8.

Within the time interval T5, T7, from the time T6 with a minimum lead time of 10 ns with respect to T7, there should be steadily present on the leads 8 a binary code corresponding to the priority level of the winner unit in the arbitration, which is therefore enabled to recognize itself as the winner and can, during the next phase of granted bus (de-asserted ARB/GNT), perform transfer operations on the bus and release the signal PREEMPT which actually rises to a positive electric level only if no other requesting units exist which are losers in the arbitration.

It should be emphasized that a unit connected to the MCA bus may also assert its request for accessing the MCA bus while ARB/GNT is asserted, but in this case it should not partake in the arbitration and should wait for the next arbitration.

This means that each unit should be equipped with logic circuits for controlling the local arbitration process and inhibiting it if the local bus access request has not been asserted ahead of the assertion of ARB/GNT.

Another peculiarity of the MCA architecture is that if the signal PREEMPT is asserted, that unit which has bus transfer operations standing cannot keep the bus indefinitely busy, but is to free it within a predetermined time period.

This functionality compares with the interfacing functionality of units with interfaces of the 386 and 68040 types, wherein the assertion of an input signal (which is pulled down to an electric level of 0) respectively termed BRQ and BOFF has a similar effect.

In order to drive the units 4 and 5 to release the MCA bus, it will therefore suffice that the MCA bus lead 6 be connected to the inputs BRQ and BOFF, respectively, of the units 4 and 5.

Additionally to this functional feature, the MCA bus is attributed a "fairness" function as an option which, when triggered on, drives a unit which has had access to the bus not to partake in the following arbitrations, by differring every request for access and consequent arbitration until a following arbitration step and, subordinately, until a de-assertion of PREEMPT is recognized.

The units 4 and 5 provide no such feature, but it is desirable that at least the unit 5 can operate according to this feature.

A further functional feature of the MCA bus and the units designed for connection to this bus, is the possibility of modifying and selectively presetting the priority level assigned to each of the units and selectively enabling the "fairness" function by means of a unit with a supervising or "master" function.

For this purpose. the units connected to the MCA bus should be provided with a register "POS" for storing certain information, and can be selected individually by asserting a signal CD SETUP on one of several leads CD each being specifically connected and routed to one of the various units.

Further information on the characteristics of the MCA bus would be quite insignificant for the purposes of the present invention, and can be found anyway in the publication MicroChannel ARchitecture - IBM January 1992.

In order to allow the units 4 and 5 to interconnect with an MCA bus, an arbitrator 10 is provided according to the invention, as shown in Figure 1, which comprises a pair of registers 11, 12, respectively POSL and POSSC, which can be respectively selected by two "setup" signals CDSET1 and CDSET2, respectively, and loaded with information entered on the leads CADBUS.

This information defines the arbitration level assigned to the units 4 and 5, respectively, and in the instance of the unit 5 whether the "fairness" function is enabled.

The output signals from the registers 11, 12 are input to an arbitration unit 13 which is also input:

- a signal HOLD output from the unit 4 and asserted at an electric level of 1 to indicate that the unit 4 needs to access the MCA channel;
- a signal HOLDSC output from the unit 5 and asserted at a zero electric level to indicate that the unit 5 needs to access the MCA channel; of course, from this signal, its negated HOLDSC can be obtained with an inverter;
- the signal ARB/GNT present on the MCA channel.

The unit 13 is also connected, for bi-directional transfer, to the leads 8 of the MCA channel to place, on the leads 8, the corresponding binary code to the arbitration level assigned to the unit 4 or the unit 5 (and received by the registers 11, 12), and to receive from the MCA bus the arbitration level present therein.

It is also connected bi-directionally to the lead 6 of the MCA channel to receive the signal PREEMPT therein and drive its level.

The signal PREEMPT will be also called BPREEMPT or MYPREEMPT hereinafter to distinguish the signal present on the MCA bus (BPREEMPT), which is the logic OR of all the access requests submitted by the various units connected to the MCA channel, from the local access request signal (MYPREEMPT) driven by the unit 13.

Finally, the unit 13 is connected to the units 4 and 5 to respectively transfer thereto a signal HOLDAL and HOLDAS responding to HOLDL and HOLDSC and conveying the meaning of bus granted.

To make the description which follows simpler, it is assumed that the unit 5 generates the signal HOLDS and is to receive the signal HOLDAS.

As shown in Figure 3, the arbitration unit 13 comprises a finite state machine 14 of the synchronous type, preferably implemented using a fast PAL (Programmable Array Logic) having a propagation time on the order of 10 ns at most, an input signal synchronization logic 15, a "fairness" logic 16, and an arbitration logic 17.

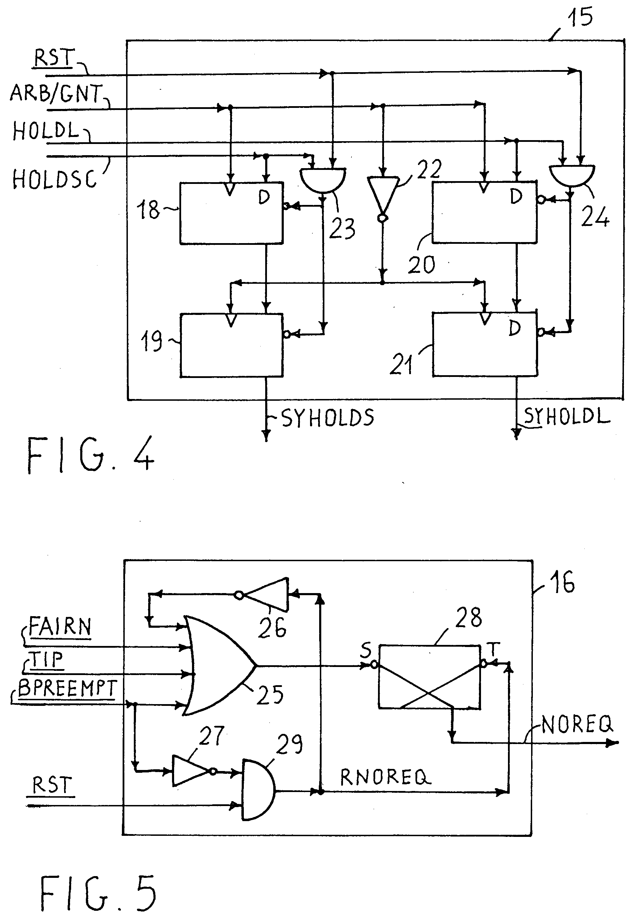

A preferred circuit implementation of the synchronization logic 15 is shown in Figure 4 and comprises four flip-flops of the D type, 18, 19, 20, 21, a logic NOT element or inverter 22, and two logic AND elements 23, 24.

The flip-flops 18 and 20 respectively receive on their D input the signal HOLDSC and signal HOLDL, and the signal ARB/GNT on their clock input.

The flip-flops 18 and 20 have their non-inverting output connected to the D input of the flip-flops 19, 21, respectively, which are input the negated signal ARB/GNT of ARB/GNT from the NOT 22 on their clock input.

A reset signal RST combined in AND with the signal HOLDS by means of the AND gate 23 resets the flip-flops 18 and 19 as at least one of the signals RST and HOLDS is at an electric level of 0, that is as RST is logically asserted and HOLDS is de-asserted.

Upon assertion of ARB/GNT and its transition to a positive electric level, the flip-flop 18 is set if HOLDS is asserted and reset if HOLDS is de-asserted.

Upon de-assertion of ARB/GNT and its transition to an electric level of 0, the state of the flip-flop 18 is duplicated by the flip-flop 19 at whose output a signal SYHOLDS is asserted or de-asserted which is input to the state machine 14 (Figure 3).

The behavior of the flip-flops 20 and 21 is quite similar, and they generate a signal SYHOLD to the state machine 14.

Although a simple one, the synchronization logic 15 plays an essential role to the arbitration unit 13.

The signals SYHOLDS and SYHOLDL are only asserted at the end of an arbitration phase, provided that their corresponding originating signals HOLDSC and HOLDL have been asserted ahead of the start of the arbitration step.

Thus, they constitute a condition steadily present at the start of the next arbitration phase which can be used by the state machine together with the transition of the signal ARB/GNT for producing a change in the machine state.

In addition, they ensure that, in conformity with the MCA arbitration protocol, the request for access to the bus which corresponds to the assertion of HOLDL and HOLDSC is asserted before the arbitration phase starts wherein the signals HOLDL and HOLDSC are considered by the arbitration.

The signals HOLDL and HOLDSC in AND with the reset signal RST provide instead immediate resetting of the flip-flops 18, 19 and 20, 21 and prompt de-assertion of SYHOLDS and SYHOLDL as soon as HOLDL and HOLDSC are de-asserted.

As shown in Figure 3, the signals HOLDSC, HOLDL and SYHOLDS, SYHOLDL are input to the state machine 14 to evolve it to states to be described.

As we shall see, the state machine is input, besides the signals already specified above, a signal NOREQ from the fairness logic 16 and a signal WIN from the arbitration logic 17, and outputs the signals HOLDAS, HOLDAL already considered with reference to Figure 1, and the signals MYPREEMPT, ENARB, SELARB to be discussed.

Figure 5 illustrates a preferred circuit implementation of the fairness logic 16 and comprises an OR gate 25 with four inputs, two inverters 26, 27, a flip-flop RS 28, and an AND gate 29 with two inputs.

The output of the OR gate 25 is connected to the set input of the flip-flop 28, whose reset input is connected to the output of the AND gate 29. The output of the AND gate 29 is connected to the input of the inverter 26, whose output is connected to an input of the OR gate 25.

The OR gate 25 receives, on the other inputs:

- a signal FAIRN (from the register POSSC 12 in Figure 1) which, when at an electric level of 1, indicates that the fairness function is not enabled;
- a signal BPREEMPT (from the MCA bus) which, when at an electric level of 0 (BPREEMPT logically asserted) indicates that there are requests for access to the MCA bus;
- a signal TIP (from the controller of I/O SCSI 5 in Figure 1) which, when at an electric level of 0, indicates that the unit 5 is involved in transfer operations on the MCA bus.

The signal BPREEMPT is also input to the inverter 27, whose output is connected to an input of the AND gate 29.

The operation of the fairness logic is quite straightforward: if the fairness function is disabled (FAIRN at an electric level of 1), the flip-flop 28 is held in the reset condition initially imposed by the asserted signal RST and periodically re-confirmed by the de-assertion of BPREEMPT.

Accordingly, the signal NOREQ at the output Q of the flip-fop 28 is permanently at an electric level of 0 or de-asserted.

When, on the other hand, the fairness function is enabled (FAIRN at an electric level of 0), if the signal BPREEMPT is asserted (BPREEMPT at an electric level of 0) while a transfer on the MCA bus is being performed under control by unit 5 (TIP at an electric level of 0), the flip-flop 28 is set and NOREQ is asserted to indicate that the fairness function is active.

The flip-flop 28 stays set throughout the time period while BPREEMPT is asserted and is reset upon de-assertion of BPREEMPT.

The signal NOREQ is input to the state machine 14, and as we shall see, it prevents, throughout the time period of its assertion, requests for access to the MCA bus from the unit 5 from being taken into consideration by the arbitrator.

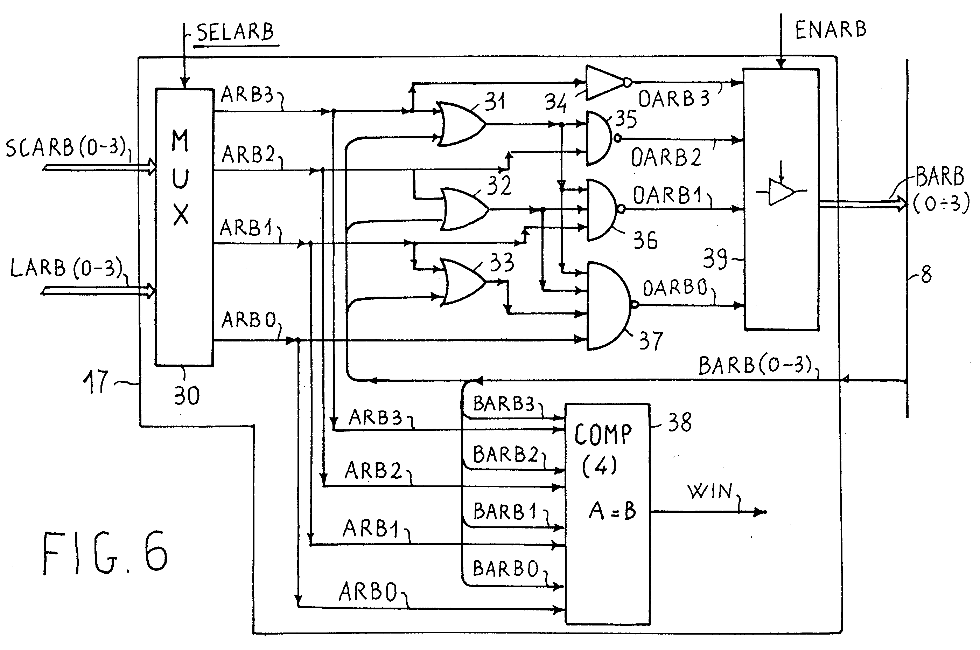

Figure 6 shows a preferred implementation of the local arbitration logic, which comprises a two-way multiplexer with four inputs 30, three OR gates with two inputs 31, 32, 33, an inverter 34, NAND gates 35, 36, 37, a comparator with four inputs 38, and a set of four tri-state drivers 39.

The multiplexer 30 receives (from the registers POSL, POSSC 11, 12 in Figure 1) the signals SCARB(0-3) and LARB(0-3) representing the priority levels assigned to the units 4, 5, respectively, and is controlled by a signal SELARB generated from the state machine.

The signals SCARB(0-1) and LARB(0-3) are output from the multiplexer 30 in a mutually exclusive manner according to whether SELARB is at an electric level of 1 or 0.

The output signals from the multiplexer 30, designated ARB(0-3), are input to the arbitration network formed of the gates 31 to 37, interconnected in a known conventional manner, for instance as shown on page 23 of the aforementioned document IBM Microchannel Architecture. The network is also input the signals BARB(0-3) present on the MCA bus leads 8 (Figure 1).

The signals OARB(0-3) output from the arbitration network are input to the set of tri-state drivers 39 whose outputs BARB(0-3) are connected to the MCA channel leads 8.

The driver set 39 are enabled to output by a signal ENARB at an electric level of 1, generated by the state machine 14.

The comparator 38 is input the output signals ARB(0-3) from the multiplexer 30 and the signals BARB(0-3) present on the MCA channel, each of which is compared to a corresponding signal ARBi.

The comparator output A=B, connected to an input of the AND gate 38, is at an electric level of 1 once the compare is verified and supplies the state machine 14 with an asserted signal WIN (at an electric level of 1) when the code ARB(0-3) output from the multiplexer 30 coincides with the code present on the MCA channel.

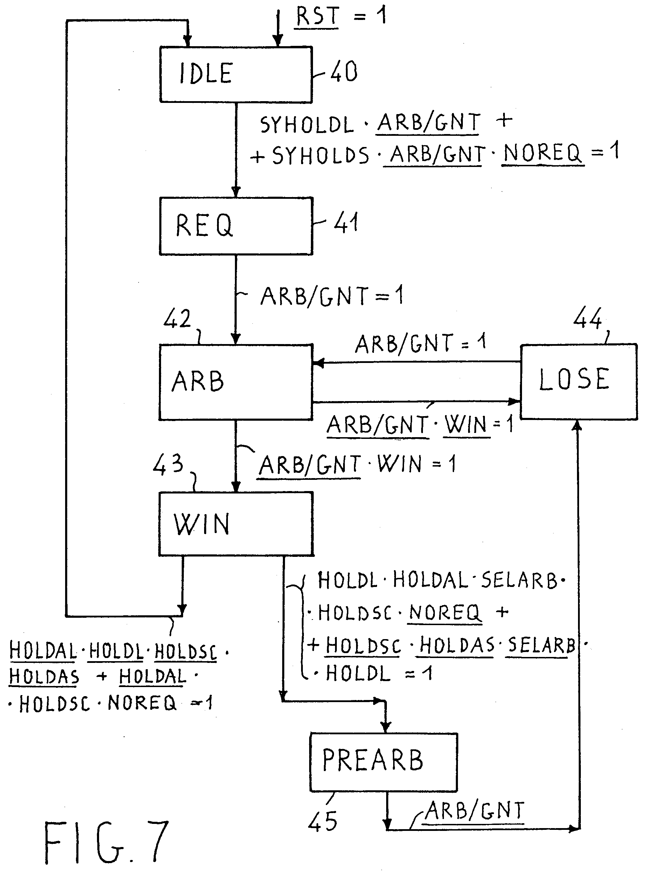

The operation of the state machine and the arbitrator can readily be appreciated from the state diagram of Figure 7 wherein the different machine states and the conditions which cause the machine to evolve from one state to another are shown.

The different machine states are described by three internal signals ST0, ST1, ST2.

The following table shows the different machine states and corresponding levels of the internal state signals:

| STATE | ST0 | ST1 | ST2 |
|-------|-----|-----|-----|
| IDLE  | 1   | 1   | 1   |
| REQ   | 1   | 0   | 1   |
| ARB   | 1   | 0   | 0   |
| LOSE  | 0   | 0   | 0   |
| WIN   | 1   | 1   | 0   |
| PRE   | 0   | 1   | 0   |

IDLE STATE

The machine is set to an initial state IDLE 40 by the assertion of an initializing signal (RST=0).

In the IDLE state, the signals ST0, ST1, ST2 are all at a level of 1.

In the IDLE state, if the asserted signal HOLDL is received, the machine drives to an asserted state the signal MYPREEMPT on the MCA channel in accordance with the equation,

$$MYPREEMPY = ST0*ST1*ST2*HOLDL$$

Still in the IDLE state, if the signal NOREQ is de-asserted (that is, if the functionality of FAIRNESS is inactive) the signal MYPREEMPT is driven to an asserted state by the assertion of HOLDSC, in accordance with the equation,

$$MYPREEMPT = ST0*ST1*ST2*HOLDSC*\overline{NOREQ}$$

In other words, when the units 4 and 5 request access to the MCA bus, the request is at once transferred to the central arbitration node (provided that the FAIRNESS function is inactive in the instance of an SCSI controller).

REQ STATE

The state machine 14 enters a state of request REQ 41 as the signal ARB/GNT is de-asserted, that is at the end of an MCA channel arbitration phase, if the following condition holds true,

$$SYHOLDL*ARB/GNT+SYHOLDS*ARB/GNT*\overline{NOREQ} = 1$$

During the REQ state 41, the signal MYPREEMPT is unconditionally asserted in accordance with the equation,

$$MYPREEMPY = ST0*\overline{ST1}*ST2$$

At the start of an arbitration phase and upon assertion of ARB/GNT on the MCA channel, the machine 14 moves from the REQ state 41 to the ARB state 42.

ARB STATE

In the ARB state, the machine may or may not assert the signal SELARB according to the signals HOLDSC and HOLDL, as per the following equation:

$$SELARB = ST0*\overline{ST1}*\overline{ST2}*HOLDSC*SYHOLDS*\overline{HOLDL}*\overline{SYHOLDL}$$

In addition, it unconditionally asserts (besides the signal MYPREEMPT, already asserted) the signal ENARB (ENARB = ST0*$\overline{ST1}$*$\overline{ST2}$) so as to enable the drivers 39 (Figure 6) to output and allow the arbitration logic 15 to partake in the arbitration process going on on the MCA channel.

If the arbitration logic recognizes, by means of the comparator 38, that either unit 4 or 5 (SELARB asserted) is the winner in the arbitration, the signal WIN is asserted.

With the signal WIN asserted, the state machine 14 goes over to the WIN state 43 from the ARB state 42 as the signal ARB/GNT on the MCA bus is de-asserted, that is on the following condition being met:

$$\overline{ARB/GNT}*WIN = 1;$$

otherwise, if WIN = 0, it enters a losing state LOSE 44 upon the following condition being met:

$$\overline{ARB/GNT}*\overline{WIN} = 1$$

WIN STATE

In the WIN state 43, the machine keeps asserting the signal ENARB unconditionally and SELARB subordinately of its previous assertion.

In addition, it asserts HOLDAL or HOLDAS in accordance with the following equations:

$$HOLDAS = ST0*ST1*\overline{ST2}*HOLDSC*SYHOLDS*\overline{SELARB}$$

$$HOLDAL = ST0*ST1*\overline{ST2}*HOLDL*SYHOLDL*SELARB$$

The signals HOLDAL, HOLDAS acknowledge to the units 4, 5, respectively that they have gained access to the bus and that a transfer phase can commence.

Upon receiving HOLDAL, the unit 4 conventionally de-asserts the signal HOLDL, which causes HOLDAL to be de-asserted by a process called "handshaking".

Similarly upon reception of HOLDAS, the unit 5 de-asserts the signal HOLDSC, which results in HOLDAS being de-asserted.

The de-assertion of HOLDL, HOLDSC respectively results, within the synchronization logic 15, in the flip-flops 20, 21 and 18, 19 being respectively reset, and therefore, in the signals SYHOLDL, SYHOLDS being respectively de-asserted.

In the WIN state, the signal MYPREEMPT is de-asserted or remains asserted according to the co-existence or otherwise, during the WIN state, of the signals HOLDSL and HOLDSC.

It will be recalled, in fact, that the state machine 14 can enter a request state due to the joint presence of the two requests for access of which one only (the access request from the controller of LAN 4 is dominant over a simultaneous access request from the controller of I/O SCSI) may access the MCA bus during the arbitration phase.

Thus, in the WIN state, the signal MYPREEMPT has a level expressed by the following equation:

$$\underline{MYPREEMPT} = ST0^*ST1^*\underline{ST2}^*HOLDS^*SYHOLDS^*SELARB^*\underline{NOREQ} +$$
$$+ ST0^*ST1^*\underline{ST2}^*HOLDL^*SYHOLDL^*\underline{SELARB}$$

This equation tells that if a request HOLDS is asserted, the fairness function is not activated ($\underline{NOREQ}$ = 1), and the controller LAN 4 took part in the arbitration just completed (SELARB asserted), the signal $\underline{MYPREEMPT}$ should continue to be asserted.

Otherwise, if $\underline{SELARB}$ = 1, the signal $\underline{MYPREEMPT}$ is de-asserted upon de-assertion of HOLDL and SYHOLDL.

For this and other reasons to be explained, from the WIN state 43 one only goes over to the IDLE state if no access request is pending from the controller LAN or the controller of I/O SCSI, on condition that the fairness function is active (NOREQ = 1).

Thus, one goes from the WIN state over to the IDLE state as the following condition is met:

$$\underline{HOLDAL}^*\underline{HOLDL}^*\underline{HOLDSC}^*\underline{HOLDAS}+\underline{HOLDAL}^*HOLDSC^*NOREQ=1$$

otherwise, one goes to a pre-arbitration PREARB state 45.

It should be also noted that the signal ENARB (and the signal $\underline{SELARB}$ if asserted) stays asserted regardless of the state, IDLE or PREARB, taken next, throughout the time period while the signal ARB/GNT is de-asserted, that is until the next arbitration step commences, in accordance with the equations,

$$ENARB = WIN^*\underline{ARB/GNT}$$

$$\underline{SELARB} = \underline{SELARB}^*WIN^*\underline{ARB/GNT}$$

## PREARB STATE

In the course of the request REQ and arbitration ARB states which precede the WIN state (and even in the WIN state), there may be asserted another request for access to the MCA bus, either from unit 4 (controller LAN) or unit 5 (controller SCSI) depending on whether, in the WIN state, the MCA bus has been assigned to the unit 5 or the unit 4.

This belated request had no part in the arbitration process, and depending on the time when it is asserted, the corresponding synchronous signal SYHOLDL or SYHOLDS may or may not be asserted.

In the latter case, a transition from the WAIT state to the IDLE state would cause the units 4 and 5 to miss their chance of partaking in the first arbitration, which takes place with the introduction of an otherwise avoidable delay, passing from the WAIT state to the pre-arbitration state.

Accordingly, the conditions that determine the transition to a PREARB state are established by the following equation:

$$HOLDL^*\underline{HOLDAL}^*SELARB^*HOLDSC^*\underline{NOREQ} +$$
$$+ HOLDSC^*\underline{HOLDAS}^*\underline{SELARB}^*HOLDL = 1.$$

The first logic product defines the condition that upon de-assertion of the signals HOLDL and HOLDAL, the unit 4 having taken part in the previous arbitration (SELARB = 1), a request for access HOLDSC asserted by the unit 5 should be present and that the fairness function should be inactive (NOREQ = 0).

It does not matter whether HOLDSC has been asserted early enough to allow the unit 5 to partake in the previous arbitration or asserted belatedly.

The second logic product defines the condition that, upon de-assertion of the signals HOLDS and HOLDAS, the unit 5 having taken part in the previous arbitration (SELARB = 1), an access request HOLDL asserted by the unit 4 should be present.

In this case, this request for access has of necessity been asserted belatedly.

The PREARB state is a temporary state gone through upon the LOSE state 44 in accordance with the equation,

$$ST0*ST1*\overline{ST2}*\overline{ARB/GNT} = 1,$$

where, ST0, ST1, ST2 are the state signals which characterize the PREARB state.

During the PREARB state, the signal MYPREEMPT keeps being asserted.

LOSE STATE

The LOSE state 44 is attained, as mentioned above, either from the ARB state or the PREARB state.

In the course of the LOSE state, the signal MYPREEMPT keeps being asserted.

The machine remains in the LOSE state awaiting the next arbitration state, and goes to the ARB state upon the following condition being met:

$$ARB/GNT = 1.$$

The foregoing description only covers a preferred embodiment of the invention, and many changes may be made thereunto.

In particular, notice that the LOSE state is function-wise an equivalent state of the request REQ state. Therefore it is possible to implement a state machine which moves from sate ARB to state WIN or to state REQ, and from state PREARB to state REQ.

It would also be possible to provide an MCA channel access arbitrator for a number of control units, with a centralized arbitration processor interface, greater than two, e.g. for connecting several SCSI I/O controllers to the same MCA channel.

In this case, it sufficies that a synchronization logic 15 similar to the one described for synchronizing N asynchronous requests for access, with N>2, a greater number of POS registers such as 11 and 12 (Figure 1) than two, a local arbitration logic 17 (Figure 3 and Figure 16) with a multiplexer having N input ways, a plurality of fairness logics (one for each unit to be provided with the fairness functionality), and a state machine be provided with the same states as described above wherein the transition from one state to another and the control signals generated take account of the presence of N>2 units, to which, besides the pre-selectable priority level for partaking in the MCA channel arbitration, a predetermined relative arbitration priority is assigned by the state machine.

It is also apparent that the multiplexing function performed by the arbitration logic may be given in the charge of the POS registers, if these are provided with a tri-state output controlled by an enable signal which may be the same signal SELARB as is generated by the state machine.

In a similar manner, with remarkable simplification, the arbitrator may be arranged to allow connection to an MCA channel of a single control unit with centralized arbitration processor interface, such as a single SCSI I/O controller.

In this case, the synchronization logic of Figure 4 would reduce to but two flip-flops, instead of four, the arbitration logic 17 would require no multiplexer or equivalent circuit, a single POS register 12 (Figure 1) would be adequate and the PREARB state of the state machine no longer be necessary, nor would the generation of the multiplexer control signal SELARB.

Claims

1. An arbitrator of access to an MCA (Micro Channel Architecture) channel by at least a first control unit (4) with centralized arbitration processor interface, in particular a LAN and SCSI control unit with an interface of the INTEL 386 or MOTOROLA 68040 type, comprising:

   at least a first register (11) associated with said first unit, selectable by said MCA channel for storing into said register a binary priority level code of the priority level assigned to the associated unit,

   a synchronization logic (15) clocked by an arbitration signal (ARB/GNT) of said MCA channel to generate, according to a signal (HOLDL) requesting access to the MCA channel, asserted by said first unit (4), a corresponding synchronized access request signal (SYHOLDL),

   a local arbitration logic (17) with inputs for receiving said binary priority level code from said first register (11) and a binary code present on said MCA channel and an output controlled to transfer, on said MCA channel during an arbitration step of said MCA channel, said binary priority level code and hold it to said MCA channel, beyond the end of said arbitration step if the priority of said binary priority level code is not less than the priority correlated to said binary code present on said MCA channel, said arbitration logic (17) generating a corresponding arbitration won signal (WIN), and

a logic state machine (14) of the asynchronous type having inputs for receiving said signal requesting access to an MCA channel, said synchronized access request signal, said arbitration won signal, and said arbitration signal of said MCA channel, and outputs for transferring a signal (MYPREEMPT) requesting access to said MCA channel of its own account, a request acknowledged signal (HOLDAL) to said control unit (4), and an output control signal (ENARB) from said arbitration logic (17), said state machine (14) having at least one inactive state (40), a request state (41), an arbitration state (42), and a win state (43), said state machine (40) going from the inactive state (40) over to the request state (41) upon de-assertion of said arbitration signal (ARB/GNT), if said synchronized access request signal is asserted, and asserting in said request state said access request signal (MYPREEMPT) of its own account, said state machine going from the request state (41) over to the arbitration state (42) upon assertion of said arbitration signal, it asserting in said state (42) said control signal (ENARB) of the arbitration logic output, said state machine going, upon de-assertion of said arbitration signal, from the arbitration state (42) over to the win state (43) if said arbitration won signal (WIN) is asserted, it asserting in said state (43) said request acknowledged signal (HOLDAL), and from the arbitration state (42) going over to a lose state (44) if said arbitration won signal is de-asserted.

2. The arbitrator of Claim 1, wherein said lose state (44) is said request state (41).

3. The access arbitrator of either Claim 1 or 2, comprising

a second register (12) associated with a second (5) control unit and selectable by said MCA channel to store a binary priority level code assigned to said second unit,

circuits (18,19) in said synchronizzation logic (17) for generating, upon receiving a signal (HOLDSC) requesting access to the MCA channel, asserted by said second unit (5), a corresponding second synchronized access request signal (SYHOLDS),

a multiplexing means (30) controlled by a signal (SELARB) generated by said state machine (14) in said arbitration state (42) for transferring, in a mutually exclusive manner to said arbitration logic (17), the binary priority level code assigned to said first unit and said second unit,

said state machine (14) having inputs for receiving said access request (HOLDSC) from said second unit and said corresponding second synchronized signal (SYHOLDS) and outputs for transferring a second request acknowledged signal (HOLDAS) to said second unit (5) and said control signal (SELARB) to said multiplexing means (30),

said state machine (14) having a pre-arbitration state (45) and going from said win state (43) over to said pre-arbitration state (45) upon de-assertion of one of said first and second access requests and of the corresponding request acknowledged signal, if the other of said first and second access requests is asserted, said state machine going from said pre-arbitration state (45) over to said lose state (44,41) upon de-assertion of said arbitration signal.

4. The arbitrator of either Claim 1 or 2 or 3, comprising a logic means (16) for generating, with the access (TIP) of one (5) of said first and second units to said MCA channel, a signal (NOREQ) inhibiting access requests fron said unit (5) until the de-assertion on said MCA channel of an access request signal (BPREEMPT), said state machine (14) receiving said de-asserted inhibit signal (NOREQ) as the condition to be met for going from said inactive state (40) over to said request state (41) upon receiving a synchronized access request (SYHOLDS) asserted by said unit (5) and for going from said win state (43) over to said pre-arbitration state (45) if an access request (HOLDSC) is asserted by said unit (5).

FIG.1

EP 0 717 362 A1

EP 0 717 362 A1

FIG. 2

FIG. 3

12

FIG. 4

FIG. 5

FIG.6

$RST = 1$

IDLE — 40

$SYHOLDL \cdot \overline{ARB/GNT} +$
$+ SYHOLDS \cdot \overline{ARB/GNT} \cdot \overline{NOREQ} = 1$

REQ — 41

$ARB/GNT = 1$

42 ARB

44 LOSE

$ARB/GNT = 1$

$\overline{ARB/GNT} \cdot \overline{WIN} = 1$

43 $ARB/GNT \cdot WIN = 1$

WIN

$\overline{HOLDAL} \cdot \overline{HOLDL} \cdot \overline{HOLDSC} \cdot$
$HOLDAS + \overline{HOLDAL} \cdot$
$\cdot \overline{HOLDSC} \cdot NOREQ = 1$

$HOLDL \cdot HOLDAL \cdot SELARB \cdot$
$\cdot HOLDSC \cdot \overline{NOREQ} +$
$+ \overline{HOLDSC} \cdot \overline{HOLDAS} \cdot SELARB \cdot$
$\cdot HOLDL = 1$

PREARB

45 $ARB/GNT$

FIG. 7

European Patent Office

**EUROPEAN SEARCH REPORT**

Application Number

EP 94 83 0573

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 464 729 (GOLDSTAR CO. LTD.)<br>* page 2, line 57 - page 3, line 32 *<br>* claim 1 *<br>--- | 1-4 | G06F13/362 |
| A | EP-A-0 564 116 (IBM CORPORATION)<br>* column 2, line 39 - column 3, line 52 *<br>* column 4, line 32 - column 6, line 9 *<br>* column 7, line 53 - column 9, line 13 *<br>* figures 3,6 *<br>----- | 1-4 | |
| | | | **TECHNICAL FIELDS SEARCHED (Int.Cl.6)**<br><br>G06F |

The present search report has been drawn up for all claims

| Place of search | Date of completion of the search | Examiner |
|---|---|---|
| THE HAGUE | 12 June 1995 | McDonagh, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)